Europäisches Patentamt

European Patent Office

Office européen des brevets

(11) Numéro de publication : **0 340 089 B1**

(12) ## FASCICULE DE BREVET EUROPEEN

(45) Date de publication du fascicule du brevet :
**22.07.92 Bulletin 92/30**

(51) Int. Cl.$^5$ : **E06B 3/54, E04B 2/88, E04D 3/14**

(21) Numéro de dépôt : **89401152.7**

(22) Date de dépôt : **24.04.89**

(54) **Elément de vitrage pour façade rideau.**

(30) Priorité : **28.04.88 FR 8805664**

(43) Date de publication de la demande :
**02.11.89 Bulletin 89/44**

(45) Mention de la délivrance du brevet :
**22.07.92 Bulletin 92/30**

(84) Etats contractants désignés :
**AT BE CH DE ES FR GB IT LI LU NL SE**

(56) Documents cités :
**EP-A- 0 130 438**
**EP-A- 0 136 064**
**EP-A- 0 192 472**
**GB-A- 2 167 110**
**CAHIERS DU CENTRE SCIENT. & TECHNIQUE**
**DU BATIMENT, no. 220, juin 1981, pages 1-22,**
**avis no. 6/80-143, Paris, F; "Avis surle pan-**
**neau de façade ELEGIS"**

(73) Titulaire : **SAINT-GOBAIN VITRAGE INTERNATIONAL**
**18, avenue d'Alsace**
**F-92400 Courbevoie (FR)**
(84) **BE CH ES FR GB IT LI LU NL SE AT**
Titulaire : **VEGLA Vereinigte Glaswerke GmbH**
**Viktoriaallee 3-5**
**W-5100 Aachen (DE)**
(84) **DE**

(72) Inventeur : **Vornholt, Hans**
**M-L-Kingstraat 17**
**NL-6471 XL Eygelshoven (NL)**
Inventeur : **Thoren, Dieter**
**In den Zwanzigmorgen 31**
**W-5100 Aachen (DE)**

(74) Mandataire : **de Toytot, Robert et al**
**SAINT-GOBAIN RECHERCHE 39 quai Lucien Lefranc B.P. 135**
**F-93304 Aubervilliers Cédex (FR)**

Jouve, 18, rue Saint-Denis, 75001 PARIS

## Description

L'invention concerne un élément de vitrage destiné à être fixé mécaniquement sur une structure porteuse comme celle par exemple d'une façade rideau entièrement vitrée.

Lors de la conception de façade rideau entièrement vitrée, on utilise classiquement plusieurs solutions pour fixer les éléments de vitrage sur la structure porteuse sans que des cadres ou des pièces métalliques dépassent la surface du vitrage. Les feuilles extérieures des éléments de vitrage individuels se trouvent après leur montage dans un plan, les uns à côté des autres, séparées par des joints de faible largeur, et la surface de la façade ne possède aucune saillie due à des éléments supports. Les joints qui subsistent entre deux éléments de vitrage voisins peuvent soit rester ouverts, soit être remplis d'une garniture d'étanchéïté par exemple un mastic adapté ou un profilé constitué d'une matière plastique à élasticité permanente.

Un élément de vitrage connu utilisé dans le but précédent est formé de deux feuilles de verre assemblées pour former un vitrage isolant dans lequel les feuilles sont maintenues à une distance déterminée l'une de l'autre par un cadre métallique auquel elles sont collées, le tout étant en général scellé par une colle étanche. Ces deux feuilles de verre sont de mêmes dimensions mais les cadres possèdent des éléments qui débordent le pourtour du vitrage et rejoignent la structure porteuse au travers des joints laissés libres entre les vitrages ce qui permet la fixation de ceux-ci sur la structure porteuse. Au lieu des éléments débordants du système précédent les cadres peuvent être équipés de parties en creux en forme de canal dirigées vers la périphérie du vitrage. Lors du montage, des pièces adaptées viennent se fixer dans ces canaux et permettent la liaison avec la structure. Des éléments de vitrage de ce type sont décrits dans la demande de brevet européen n° 130 438 A2 et dans la demande française n° 2 577 274.

Un autre élément de vitrage du type décrit ci-dessus est constitué de deux feuilles de verre assemblées avec un espace d'air par l'intermédiaire d'un cadre qui se caractérise en ce que la feuille de verre extérieure qui constitue la surface de la façade déborde, au moins en certains endroits la feuille intérieure et le cadre. La fixation du vitrage sur la structure porteuse se fait sur les parties débordantes de la feuille extérieure à l'aide de vis qui y sont encastrées de telle sorte que leur surface externe constitue une continuité avec la surface du vitrage. Un élément de vitrage du type précédent est décrit dans le brevet européen n° 136 064 B1.

La présente invention a pour object un élément de vitrage du type de ceux décrits plus haut mais celui-ci n'utilise pour sa fixation sur la structure porteuse ni le cadre intercalaire ni des trous dans la feuille de verre extérieure. Il assure néanmoins une fixation esthétique et sûre.

L'élément de vitrage conforme à l'invention se caractérise en ce que seule ladite feuille du coté du bâtiment est percée, de préférence près des bords, de trous traversés chacun par un élément de fixation destiné au vissage qui comprend une partie en forme de rondelle, la rondelle s'appuyant d'une part sur la surface de la feuille à la périphérie du trou et étant collée d'autre part à la feuille extérieure par l'intermédiaire de la couche intercalaire du vitrage feuilleté.

L'utilisation d'une feuille de verre trempée obtenue de préférence par trempe thermique comme feuille unitaire interne présente des avantages grâce à ses performances bien connues dans le domaine de la résistance à la flexion qui autorise de la soumettre à des charges mécaniques relativement élevées comme elle peuvent éventuellement intervenir lors d'une fixation ponctuelle par des vis. Comme on a prévu de protéger la feuille de verre trempé sur sa face extérieure par une feuille de verre recuit le risque qu'une blessure mécanique provenant de l'extérieure provoque la casse du verre trempé est exclu. Par ailleurs, si pour une autre raison la feuille de verre trempé venait à se rompre le collage entre le support en forme de rondelle et la feuille extérieure garantit une fixation suffisante entre la feuille extérieure et les vis de fixation. On obtient ainsi que, même en cas de casse d'une des feuilles unitaires de l'élément de vitrage, celui-ci garde son intégrité et reste fixé à la structure porteuse. Cela reste valable même si les deux feuilles constituant le verre feuilleté cassent car le film intercalaire en matière plastique garantit que les fragments restent solidaires les uns des autres et solidaires de la structure.

Des exemples de réalisation de l'invention apparaitront clairement à l'aide des figures suivantes.

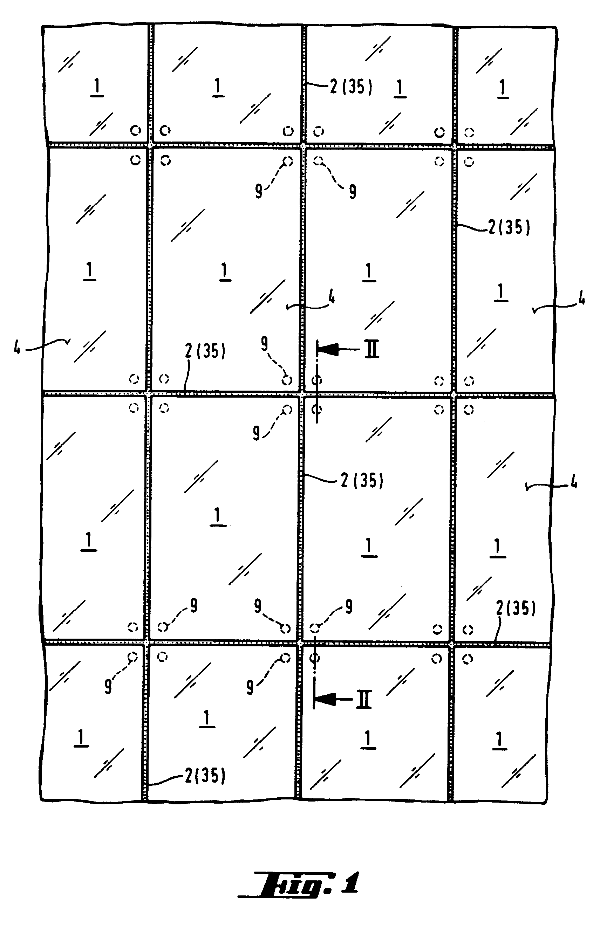

Parmi celles-ci la figure 1 représente une vue d'une façade équipée d'un élément de vitrage selon l'invention.

La figure 2 qui est une coupe selon II-II de la figure 1 représente un élément de vitrage selon l'invention dans un premier mode de réalisation.

La figure 3 représente un deuxième mode de réalisation du même élément de vitrage avec une coupe dans la zone comprenant la vis de fixation.

La figure 4 représente un autre mode de réalisation d'un vitrage selon l'invention où figurent les éléments nécessaires au montage.

Sur la figure 1 qui présente une vue partielle d'une façade on voit la surface de celle-ci constituée de nombreux éléments de vitrage 1 séparés les uns des autres par des joints de faible largeur. Les joints 2 qui subsistent entre les éléments de vitrage 1 seront remplis d'une garniture d'étanchéïté constituée d'une colle à élasticité permanente après que les éléments de vitrage 1 aient été montés sur la structure porteuse adéquate. On peut également laisser les joints ouverts ou les équiper d'un profilé constitué d'une matière plastique élastique. Dans tous les cas comme la surface de la façade ne comporte aucun élément débordant on obtient une façade plane continue.

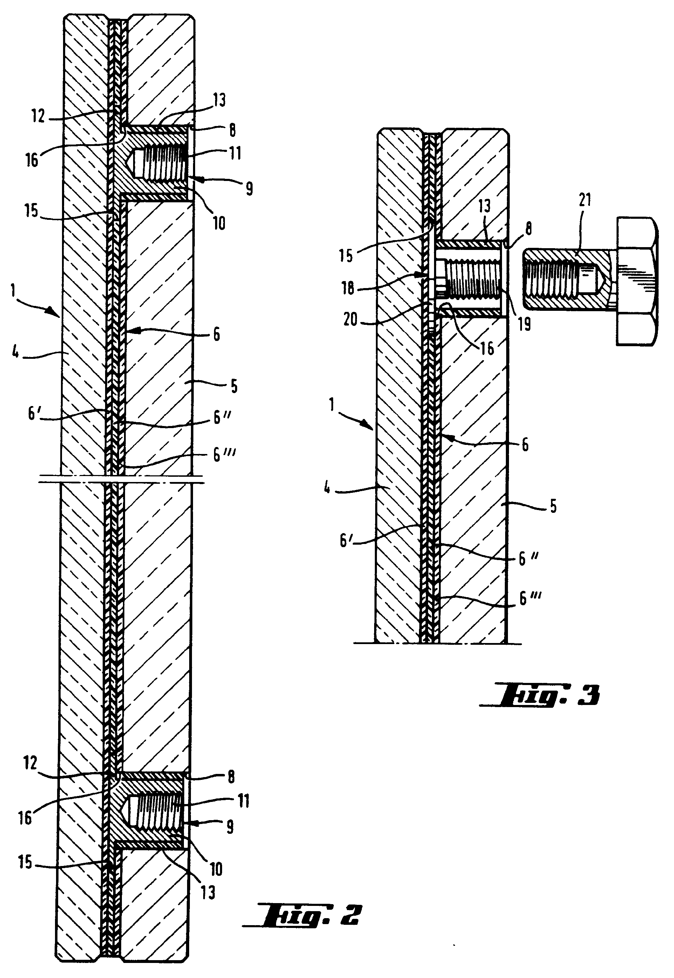

Sur la figure 2 on voit une coupe d'un élément de vitrage 1 présenté dans sa forme la plus simple. Il est constitué d'une feuille externe en verre et d'une feuille interne 5 également en verre liée à la première par un film thermoplastique 6.

La feuille extérieure 4 est en verre flotté traditionnel. Elle pourrait également être constituée d'un verre plat d'une autre nature par exemple avec une surface présentant un relief. De plus la feuille 4 peut porter sur l'une de ses surfaces une couche fonctionnelle par exemple une couche semi-réfléchissante. De plus la feuille extérieure 4 peut être constituée soit de verre normalement recuit c'est-à-dire exempt de contraintes ou alors d'un verre plus ou moins trempé. En revanche la feuille interne 5 est dans tous les cas en verre trempé. Sa contrainte de trempe doit être telle que la feuille 5 atteigne la résistance à la flexion souhaitée. Un niveau de trempe adapté est celui qui correspond à un verre de sécurité trempé habituel.

La feuille de verre intérieure 5, réalisée par la trempe par exemple d'un verre flotté de 8 mm d'épaisseur, possède au voisinage de ses quatre coins des trous 8. Ces trous ont dû être percés bien évidemment avant d'effectuer l'opération de trempe. Dans chacun de ces trous 8 on a placé un élément de liaison par vissage 9. L'élément 9 est constitué d'un cylindre creux 10 avec à l'intérieur un filetage 11 et se termine par une partie en forme de rondelle 12. Le diamètre externe de cette rondelle 12 est supérieur au diamètre du trou 8. De la sorte, la rondelle 12 peut s'appuyer sur la surface de la feuille de verre 5. On décrit ici une extrémité élargie de l'élément de liaison 9 de forme circulaire, mais il est évident qu'une autre forme, celle d'un carré par exemple permettrait de remplir la même fonction que la rondelle décrite. Cette remarque s'applique également à la partie cylindre 10 de la pièce 9 dont la section pourrait être quelconque. Entre le cylindre 10 et la paroi du trou 8 on a placé un manchon 13 fait dans une matière plastique appropriée.

Le film intercalaire 6 est constitué d'une matière plastique utilisée habituellement pour l'assemblage du verre feuilleté comme par exemple du butyral de polyvinyl. Pour assurer le collage adéquat entre la rondelle 12 et la surface de la feuille de verre extérieure 4 et pour permettre d'autre part le montage sans contrainte de l'élément de liaison par vissage 9, le film intercalaire 6 est réalisé par l'association de trois feuilles élémentaires 6′, 6″, 6‴. Tandis que la feuille 6′ ne comporte pas de traversée au droit de l'élément de liaison par vissage 9, la feuille 6″ possède dans la même zone une traversée 15 dont le diamètre correspond à celui de la rondelle 12. La feuille 6‴ qui est au contact de la feuille de verre intérieure 5 est elle aussi prévue avec une traversée 16 mais ici le diamètre de la traversée 16 correspond au diamètre externe du cylindre creux 10 ou du manchon 13. L'épaisseur de la feuille intermédiaire 6″ est la même que celle de la rondelle 12. Durant la phase de fabrication du vitrage feuilleté qui produit le collage des films thermoplastiques en mettant en oeuvre chaleur et pression, les trois feuilles 6′, 6″, 6‴ fondent simultanément et se transforment en une couche intercalaire homogène 6.

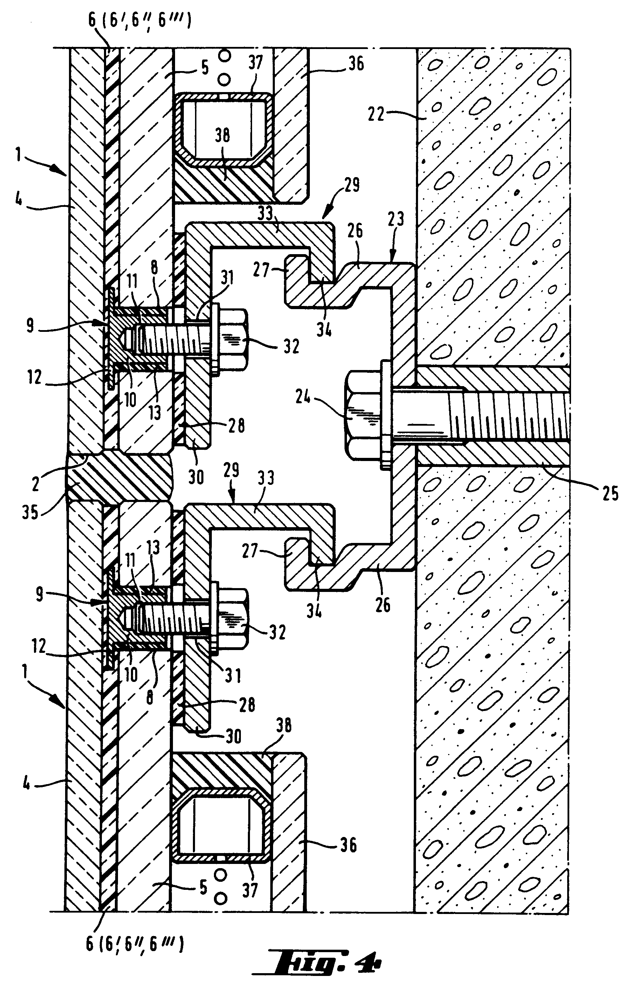

Le mode de réalisation présenté figure 3 montre un élément de liaison par vissage 18 à l'intérieur d'un trou 8 pratiqué dans la feuille de verre intérieure 5. L'élément 18 est ici une tige filetée 19 directement liée à la rondelle 12. Dans ce cas la tige filetée 19 sera bloquée lors du montage, par vissage de la pièce 21 qui possède un trou fileté, ce qui permet de fixer l'élément de vitrage à la structure support.

Sur la figure 4 on a représenté un exemple de réalisation du montage d'un élément de vitrage selon l'invention sur la façade d'un bâtiment. On voit ici un mur 22 du bâtiment sur lequel on a fixé un profilé horizontal en U 23 par exemple à l'aide de vis 24 insérées dans des chevilles 25. Il s'agit maintenant de fixer l'élément de vitrage 1 à ce profilé métallique 23. Les éléments de vitrage 1 sont à leur tour équipés le long de leur bord supérieur et inférieur, de profilé en L 29. Sur le profilé 29 on a prévu des trous 31 qui correspondent aux vis 32 qui fixent l'élément de vitrage 1. Chaque élément de vitrage est fixé en deux ou plusieurs endroits sur le profilé 29 selon sa taille. De manière classique on a placé entre la feuille de verre 5 et le profilé 29 une couche intercalaire élastique 28. Chacune des ailes 26 du profilé 23 possède un ressaut 27. De manière correspondante les profilés métalliques 29 possèdent à l'extrémité de leur aile perpendiculaire à la feuille de verre un retour 34 dirigé vers le bas. On peut de cette manière suspendre les éléments de vitrage 1 individuellement dans les profilés métalliques 23.

Il va de soi que d'autres méthodes de montage sont possibles dans lesquelles on équiperait l'élément de vitrage 1 d'autres profilés qui pourraient, lors du montage, s'accrocher à la structure porteuse. Selon les cas et selon la nature de la conception de la structure porteuse on peut également envisager de fixer directement par vissage l'élément de vitrage sur des pièces de la structure.

On peut également remplir les joints entre deux éléments de vitrage 1 à l'aide d'un mastic 35 qui reste élastique de manière durable.

De même on voit figure 4 que l'élément de vitrage 1 pourrait faire partie d'un vitrage isolant dont la deuxième face serait constituée par la feuille 36. La feuille de verre 36 est associée de manière connue à la feuille intérieure 5 par l'intermédiaire d'un cadre 37. L'espace restant libre à l'extérieur du cadre est rempli par une colle étanche 38. La feuille de verre 36 a une dimension inférieure aux feuilles de verre 4 et 5 qui constituent le verre feuilleté la différence correspondant approximativement à l'aile du profilé 29.

## Revendications

1. Elément de vitrage destiné à être fixé mécaniquement sans encadrement, par exemple dans une façade rideau entièrement vitrée, comprenant au moins deux feuilles (4, 5) collées par l'intermédiaire d'un film intercalaire en matière plastique (6) pour constituer un vitrage feuilleté, la feuille (5) du côté du bâtiment étant en verre trempé caractérisé en ce que seule ladite feuille (5) du côté du bâtiment est percée, de préférence près des bords, de trous (8) traversés chacun par un élément de fixation (9 ; 18) destiné au vissage qui comprend une partie en forme de rondelle (12 ; 20) la rondelle (12 ; 20) s'appuyant d'une part sur la surface de la feuille (5) à la périphérie du trou (8) et étant collée d'autre part à la feuille extérieure (4) par l'intermédiaire de la couche intercalaire (6) du vitrage feuilleté.

2. Elément de vitrage selon la revendication 1, caractérisé en ce que l'élément de fixation (9) est constitué d'une partie en forme de rondelle (12) et d'un cylindre creux (10) avec un filetage intérieur (11).

3. Elément de vitrage selon la revendication 1, caractérisé en ce que l'élément de fixation (9) est constitué d'une partie en forme de rondelle (20) et d'une tige filetée (19).

4. Elément de vitrage selon la revendication 2 ou 3, caractérisé en ce que la feuille de verre extérieure (4) est en verre recuit c'est-à-dire non trempé.

5. Elément de vitrage selon l'une ou plusieurs des revendications 1 à 4, caractérisé en ce que la couche intercalaire (6) est formée de plusieurs feuilles (6', 6", 6''') en matière thermoplastique telle que le butyral de polyvinyl, la feuille (6') placée le long du verre extérieur (4) étant ininterrompue tandis que la feuille voisine (6") est percée de trous (15) dont le diamètre correspond à celui de la partie en forme de rondelle (12 ; 20).

6. Elément de vitrage selon l'une ou plusieurs des revendications 1 à 5, caractérisé en ce qu'on associe à la feuille de verre trempée intérieure (5) une feuille de verre supplémentaire (36) par l'intermédiaire d'un cadre intercalaire (37) et une garniture d'étanchéité (38), les dimensions superficielles de la feuille de verre supplémentaire (36), étant, au moins dans une direction inférieure aux dimensions des feuilles de verre (4, 5) constituant le vitrage feuilleté.

## Claims

1. Glazing element, intended to be mechanically fixed without a frame, for example into an entirely glazed external curtain wall, the element comprising at least two panes (4, 5) glued together by means of an intermediate film of plastics material (6) to form a laminated glazing pane, the pane (5) on the side toward the building being of toughened glass, characterized in that only said pane (5) on the side towards the building is perforated, preferably near its edges, by holes (8) each traversed by a fixing element (9; 18) intended for screwing, which comprises a portion in the shape of a washer (12; 20), the washer (12; 20) bearing, in the one hand, against the surface of the pane (5) around the periphery of the hole (8) and being glued, on the other hand, to the outer pane (4) by means of the intermediate film (6) of the laminated glazing pane.

2. Glazing element according to Claims 1, characterized in that the fixing element (9) is constituted of a washer-shape part (12) and of a hollow cylinder (10) having an internal thread (11).

3. Glazing element according to Claim 1, characterized in that the fixing element (9) is constituted of a washer-shaped part (20) and of a threaded rod (19).

4. Glazing element according to Claims 2 or 3, characterized in that the outer glass pane (4) is of annealed glass, that is to say non-toughened glass.

5. Glazing element according to or more of Claims 1 to 4, characterized in that the intermediate film (6) is composed of several sheets (6', 6", 6''') of thermoplastics material such as polyvinyl butyral, the sheet (6') situated along the outer glass (4) glass (4) being uninterrupted, whereas the adjoining sheet (6") is perforated by holes (15) having a diameter corresponding to that of the washer-shaped part (12; 20).

6. Glazing element according to one or more of Claims 1 to 5, characterized in that a supplementary glass pane (36) is associated with the internal, toughened glass pane (5) by means of an intermediate frame (37) and a sealing gasket (38), the surface dimensions of the supplementary glass pane (36) being, at least in one direction, smaller than the dimensions of the glass panes (4, 5) constituting the laminated glazing pane.

## Patentansprüche

1. Verglasungselement für die rahmenlose mechanische Befestigung, beispielsweise in einer Ganzglasfassade, mit wenigstens zwei Glasscheiben (4,5), die durch Zwischenschaltung eines Zwischenfilms aus Kunststoff (6) zur Bildung eines Verbundglases miteinander verklebt sind, von denen die dem Gebäude zugewandte Glasscheibe (5) aus vorgespanntem Glas besteht, dadurch gekennzeichnet, daß nur die dem Gebäude zugewandte Glasscheibe (5) vorzugsweise in der Nähe ihrer Ränder mit Bohrungen (8) versehen ist, in denen jeweils ein scheibenförmiges Halteteil (12,20) aufweisendes Schraubbefestigungselement (9,18) angeordnet ist, dessen scheibenförmiges Halteteil (12,20) sich einerseits auf der Oberfläche der Glasscheibe (5) im Umgebungsbereich der Bohrung (8) abstützt und andererseits über die Zwischenschicht (6) der Verbundglasscheibe mit der äußeren Scheibe (4) verklebt ist.

2. Verglasungselement nach Anspruch 1, dadurch gekennzeichnet, daß das Befestigungselement (9) aus einem scheibenförmigen Halteteil (12) und einem hohlzylindrischen Teil (10) mit Innengewinde (11) besteht.

3. Verglasungselement nach Anspruch 1, dadurch gekennzeichnet, daß das Befestigungselement (9) aus einem scheibenförmigen Halteteil (20) und einem Gewindebolzen (19) besteht.

4. Verglasungselement nach Anspruch 2 oder 3, dadurch gekennzeichnet, daß die äußere Glasscheibe (4) aus gekühltem, das heißt nicht vorgespanntem Glas besteht.

5. Verglasungselement nach einem oder mehreren der Ansprüche 1 bis 4, dadurch gekennzeichnet, daß die Zwischenschicht (6) aus mehreren Folien (6',6",6''') aus thermoplastischem Kunststoff wie Polyvinylbutyral besteht, von denen die an der äußeren Glasscheibe (4) anliegende Folie (6') eine geschlossene Fläche aufweist und die sich anschließende Folie (6") mit dem Durchmesser der scheibenförmigen Teile (12,20) entsprechenden Durchbrechungen (15) versehen ist.

6. Verglasungselement nach einem oder mehreren der Ansprüche 1 bis 5, dadurch gekennzeichnet, daß mit der inneren, vorgespannten Glasscheibe (5) eine weitere Glasscheibe (36) über einen Abstandsrahmen (37) und eine Dichtklebemasse (38) verbunden ist, deren flächenmäßige Abmessungen wenigstens in einer Richtung kleiner sind als die Flächenabmessungen der die Verbundglasscheibe bildenden Glasscheiben (4,5).

*Fig. 1*

**Fig. 2**

**Fig. 3**

*Fig. 4*